# EUROPÄISCHE PATENTSCHRIFT

(11) **EP 3 534 453 B1**
(45) Veröffentlichungstag und Bekanntmachung des Hinweises auf die Patenterteilung: **22.09.2021**
(21) Anmeldenummer: 19160168.1
(22) Anmeldetag: 01.03.2019
(51) Int. Cl.: H01M 10/44, H01M 10/42, H02J 7/00

(54) **AKKUPACK FÜR EIN ELEKTROGERÄT, LADEGERÄT FÜR EINEN AKKUPACK UND VERFAHREN ZUM BETREIBEN EINES AKKUPACKS**
BATTERY PACK FOR AN ELECTRICAL DEVICE, CHARGING DEVICE FOR A BATTERY PACK AND METHOD FOR OPERATING A BATTERY PACK
BLOC D'ACCUMULATEUR POUR UN APPAREIL ÉLECTRIQUE, CHARGEUR POUR UN BLOC D'ACCUMULATEUR ET PROCÉDÉ DE FONCTIONNEMENT D'UN BLOC D'ACCUMULATEUR

(30) Priorität: 01.03.2018 DE 102018104711
(43) Veröffentlichungstag der Anmeldung: 04.09.2019
(73) Patentinhaber: Einhell Germany AG, 94405 Landau / Isar (DE)
(72) Erfinder: Dr. Thannhuber, Markus, 94405 Landau (DE); Dr. Sternad, Michael, 4020 Linz (AT)
(74) Vertreter: Hofstetter, Schurack & Partner

(56) Entgegenhaltungen:
- WO-A1-2017/114889
- DE-A1-102013 112 923

## Beschreibung

Die Erfindung betrifft einen Akkupack für ein Elektrogerät, ein Ladegerät für einen Akkupack und ein Verfahren zum Betreiben eines solchen Akkupacks.

Der Energieinhalt eines Akkupacks wird durch eine Vielzahl von technischen Parametern beeinflusst, welche gezielt während einer Entwicklung beziehungsweise während der Auslegung des Akkupacks optimiert werden. So beeinflussen beispielsweise die Materialien und Dimensionen von Anode und Kathode sowie beispielsweise auch der verwendete Elektrolyt eine bauartbedingt speicherbare Energie eines Akkupacks. Die Vielzahl der technischen Parameter haben alle einen gewissen Einfluss auf die mittels des Akkupacks bereitstellebare Energie beziehungsweise Energiemenge, welche auch schlussendlich als Nennkapazität ihren Niederschlag findet. Bei der Entwicklung solcher Akkupacks gibt es mehrere konträre Anforderungen möglichst optimal zu balancieren. Beispielsweise sollen Größe und Gewicht von Akkupacks möglichst minimiert, gleichzeitig aber die mittels Akkupacks bereitstellbare Energie maximiert werden. Zudem ist es im Hinblick auf einen Transport von Akkupacks wünschenswert, dass diese keinen allzu großen Energieinhalt aufweisen, jedoch sollen andererseits die Akkupacks während ihrer Verwendung möglichst lange beziehungsweise möglichst viel Energie bereitstellen können.

Aus der Druckschrift DE 10 2013 112 923 A1 ist einen Lithium-Ionen-Akku für tragbare elektronische Geräte bekannt. Mehrere Speichermodule sind miteinander verschaltet und bei einem oder mehreren dieser Speichermodule kann es zu Unregelmäßigkeiten kommen. Ein Batteriemanagementsystem ist in der Lage, derartige Unregelmäßigkeiten zu berücksichtigen und eine entsprechende Strombegrenzung zu aktivieren oder zu deaktivieren. Eine Steuerungseinrichtung des Batteriemanagementsystems kann beispielsweise einen unnormalen Spannungsabfall feststellen und eine Strombegrenzung initiieren. Gegebenenfalls wird diese Begrenzung auch wieder aufgehoben.

Es ist die Aufgabe der vorliegenden Erfindung, eine Lösung bereitzustellen, mittels welcher einerseits ein besonders sicherer Transport von Akkupacks und andererseits eine möglichste gute Energiebereitstellung durch Akkupacks erzielt werden kann.

Diese Aufgabe wird durch einen Akkupack für ein Elektrogerät, durch ein Verfahren zum Betreiben eines Akkupacks sowie durch ein Ladegerät mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Der erfindungsgemäße Akkupack für ein Elektrogerät, insbesondere für ein elektrisches Handwerkzeug und/oder elektrisches Gartengerät, umfasst mehrere Batteriezellen und eine Steuereinrichtung. Die Steuereinrichtung ist dazu eingerichtet, eine mittels des Akkupacks bauartbedingt speicherbare Energie auf einen vorgebbaren reduzierten Energiewert zu begrenzen. Zudem ist die Steuereinrichtung dazu eingerichtet, die Begrenzung nur dann aufzuheben, sodass nach einem entsprechenden Ladevorgang die bauartbedingt speicherbare Energie des Akkupacks wieder bereitstellbar ist, wenn mittels der Steuereinrichtung wenigstens ein vorgegebenes Freischaltsignal empfangen worden ist.

Die Steuereinrichtung kann automatisch eine Art Schutzmodus aktivieren bzw. bewirken, infolgedessen automatisch die mittels des Akkupacks bauartbedingt speicherbare Energie auf den vorgebbaren reduzierten Energiewert begrenzt wird. Über eine Sensorik können beispielsweise Informationen über Spannungen, Temperaturen und dergleichen der Batteriezellen bereitgestellt und überwacht werden. Zudem können beispielsweise auch über im Akkupack verbaute Sensoren, z.B. Beschleunigungs- und/oder GPS-Sensoren, Bewegungsmuster erfasst und mit vorgegebenen Bewegungsmustern verglichen werden. Wird beispielsweise erkannt, dass der Akkupack anders bewegt wird, als dieser beispielsweise bei bestimmungemäßem Einsatz in einem Lade- oder Elektrogerät bewegt werden kann, kann das als Auslöser dafür dienen, dass die bauartbedingt speicherbare Energie automatisch auf den vorgebbaren reduzierten Energiewert begrenzt wird. Die automatische Begrenzung kann zum Beispiel auch über einen Cloud-basierten Dienst, über eine loT-Anwendung (wobei IoT für Internet of Things steht) oder dergleichen erfolgen.

Vorzugsweise handelt es sich bei den Batteriezellen um Batteriezellen auf Lithium-Ionen-Basis. Der Akkupack kann aber genauso gut auch andere Zelltypen aufweisen. Vorzugsweise ist der Akkupack derart ausgelegt, dass ausschließlich die Steuereinrichtung die einmal eingestellte Begrenzung auf den reduzierten Energiewert auch wieder aufheben kann. Bei dem erfindungsgemäßen Akkupack ist es also möglich, einerseits vor und während des Transports des Akkupacks dafür zu sorgen, dass dieser einen besonders geringen Energieinhalt aufweist und somit auch besonders sicher transportiert werden kann, selbst wenn es zu einer Beschädigung oder gar Zerstörung des Akkupacks kommen sollte. Denn durch den künstlich reduzierbaren Energiewert kann vor einem Transport bei dem erfindungsgemäßen Akkupack mittels der Steuereinrichtung sichergestellt werden, dass selbst im Falle einer Beschädigung oder Zerstörung des Akkupacks dieser so wenig Energie in sich trägt, dass es zu keinen kritischen Situationen kommen kann. Beispielsweise ist es denkbar, dass die bauartbedingt speicherbare Energie des Akkupacks mehrere 100 Wattstunden aufweist, wohingegen der reduzierte Energiewert unter 100 Wattstunden liegt.

Dadurch, dass die künstliche Begrenzung auf den reduzierten Energieinhalt mittels der Steuereinrichtung wieder aufgehoben werden kann, kann der Akkupack beispielsweise nach einem Transport und Erreichen eines bestimmungsgemäßen Ortes in ein Elektrogerät eingesetzt werden und nach einem entsprechenden Ladevorgang seine bauartbedingt speicherbare Energie bereitstellen.

Insbesondere ist es bei dem erfindungsgemäßen Akkupack nicht möglich, die mittels der Steuereinrichtung vorgenommene Reduzierung auf den reduzierten Energiewert aus Versehen, zufällig oder unabsichtlich, beispielsweise durch Stöße oder zerstörerische Einflussnahme, zu verändern. Während Transport und Lagerung des Akkupacks und auch gegebenenfalls während dieser Zeit erforderlichen Lade- oder Entladezyklen kann sichergestellt werden, dass der Akkupack nur den reduzierten Energiewert in sich tragen kann. So ist es beispielsweise bei dem erfindungsgemäßen Akkupack auf einfache Weise möglich, sämtlichen regulatorischen Ansprüchen nationaler oder internationaler Art für Lagerung und Transport Rechnung zu tragen, indem einfach die Steuereinrichtung des Akkupacks den reduzierten Energiewert entsprechend einstellt.

Sobald der Akkupack, insbesondere bei einem Endkunden, verwendet werden soll, kann die Steuereinrichtung die Begrenzung wiederum aufheben, wofür lediglich das besagte vorgegebene Freischaltsignal mittels der Steuereinrichtung empfangen werden muss. Die Übertragung des Freischaltsignals an die Steuereinrichtung erfolgt dabei vorzugsweise derart gesichert, beispielsweise durch geeignete Verschlüsselungstechnologien, dass die einmal eingestellte Begrenzung zumindest nicht ohne weiteres manipuliert und aufgehoben werden kann.

Gemäß einem weiteren unabhängigen Aspekt der Erfindung kann es auch vorgesehen sein, dass ein Ladegerät dazu ausgelegt und eingerichtet ist, die mittels des Akkupacks bauartbedingt speicherbare Energie auf einen vorgebbaren reduzierten Energiewert zu begrenzen. Das Ladegerät, beispielsweise eine Steuereinrichtung des Ladegeräts, kann alternativ oder zusätzlich die obenstehend genannte Funktion der Steuereinrichtung des Akkupacks übernehmen. Zum Beispiel kann es vorgesehen sein, dass bei einem erstmaligen Einstecken des Akkupacks ins Ladegerät dieses automatisch die Begrenzung auf den vorgebbaren reduzierten Energiewert vornimmt. Auch kann beispielsweise eine Seriennummer des Akkupacks mittels des Ladegeräts ausgelesen und an einer Servereinrichtung, z.B. in Form einer Cloud, übertragen und dort abgeglichen werden. Anhand des Abgleichs kann bei im Ladegerät eingestecktem Zustand automatisch entschieden werden, ob die besagte Begrenzung vorgenommen werden soll. Auch ist es möglich, dass ein Barcode am Akkupack eingelesen und dieser z.B. wiederum über einen cloudbasierten Dienst abgeglichen wird. Anhand des eingelesenen und verglichenen Barcodes kann wiederum entschieden werden, ob die automatische Begrenzung erfolgen soll. Ganz allgemein kann das Ladegerät dazu eingerichtet sein, die Begrenzung auf den reduzierten Energiewert vorzunehmen, wenn bei eingestecktem bzw. angeschlossenem Akkupack mittels des Ladegeräts ein vorgegebenes Begrenzungssignal empfangen worden ist.

Eine vorteilhafte Ausführungsform der Erfindung sieht vor, dass die Steuereinrichtung dazu eingerichtet ist, die Begrenzung auf den reduzierten Energiewert vorzunehmen, wenn mittels der Steuereinrichtung ein vorgegebenes Begrenzungssignal empfangen worden ist und/oder wenn der Akkupack erstmalig in Betrieb genommen wird. Nach der Produktion des Akkupacks kann es beispielsweise vorgesehen sein, dass automatisiert das besagte Begrenzungssignal an die Steuereinrichtung des Akkupacks übermittelt wird, infolgedessen die Steuereinrichtung dann die mittels des Akkupacks an sich bauartbedingt speicherbare Energie auf den reduzierten Energiewert begrenzt. Alternativ oder zusätzlich ist es auch möglich, dass die Steuereinrichtung dazu eingerichtet ist, die bauartbedingt speicherbare Energie auf den vorgebbaren reduzierten Energiewert automatisch zu begrenzen, sobald der Akkupack erstmalig in Betrieb genommen wird. Dies kann beispielsweise ebenfalls im Rahmen der Produktion des Akkupacks erfolgen, wenn dieser beispielsweise im Zuge einer Endkontrolle kurz in Betrieb genommen wird. In beiden Fällen kann auf zuverlässige Weise sichergestellt werden, dass die Begrenzung auf den reduzierten Energiewert vollautomatisch durch die Steuereinrichtung im Rahmen einer Produktion beziehungsweise im Anschluss an die Produktion erfolgen kann. Alternativ oder zusätzlich ist es auch möglich, dass beispielsweise eine von außen zugängliche Taste am Akkupack vorgesehen ist, wobei durch Drücken dieser Taste das besagte Begrenzungssignal an die Steuereinrichtung übertragen wird. So könnte zum Beispiel ein Werker innerhalb einer Batterieproduktion nach Fertigstellung des Akkupacks einfach diese Taste drücken, infolgedessen noch vor der Verpackung des Akkupacks die Begrenzung auf den reduzierten Energiewert automatisch durch die Steuereinrichtung vorgenommen wird.

Eine weitere vorteilhafte Ausführungsform der Erfindung sieht vor, dass die Steuereinrichtung dazu eingerichtet ist, zur Begrenzung auf den reduzierten Energiewert eine Ladeschlussspannung des Akkupacks so weit herabzusetzen, dass beim Laden des Akkupacks der reduzierte Energiewert nicht überschritten werden kann. Insbesondere wenn man davon ausgeht, dass der Akkupack direkt nach seiner Herstellung ohnehin noch nicht seine bauartbedingt speicherbare Energie aufweist, kann durch die entsprechende Herabsetzung der Ladeschlussspannung auf einfache Weise sichergestellt werden, dass der Akkupack trotz eines Ladevorgangs gar nicht so sehr aufgeladen werden kann, dass er seine bauartbedingt speicherbare Energiemenge aufweist. Zudem ist es beispielsweise auch möglich, dass der Akkupack nach seiner Produktion automatisch soweit entladen wird, dass er nur noch eine Energie beinhaltet, die unterhalb des vorgebbaren reduzierten Energiewerts liegt. Wird danach der Akkupack, beispielsweise zu Testzwecken oder dergleichen, an ein Ladegerät angeschlossen, so kann durch entsprechende Herabsetzung der Ladeschlussspannung jederzeit zuverlässig sichergestellt werden, dass der Akkupack nicht über den vorgebbaren reduzierten Energiewert hinaus aufgeladen werden kann.

Gemäß einer weiteren vorteilhaften Ausführungsform der Erfindung ist es vorgesehen, dass die Steuereinrichtung dazu eingerichtet ist, eine Entladeschlussspannung des Akkupacks unter einen für einen herkömmlichen Betrieb des Akkupacks vorgesehenen Wert abzusenken. Diese Maßnahme kann beispielsweise gleichzeitig mit der Herabsetzung der Ladeschlussspannung oder einer anderweitigen Maßnahme zur Begrenzung auf den reduzierten Energiewert erfolgen. Das Herabsetzen der Entladeschlussspannung des Akkupacks unter den für den herkömmlichen Betrieb des Akkupacks vorgesehenen Wert bringt den Vorteil mit sich, dass der Akkupack noch weiter entladen werden kann, als dies im herkömmlichen Betrieb vorgesehen ist. So ist es beispielsweise möglich, dass der Akkupack vor einem Transport bis zum Erreichen der abgesenkten Entladeschlussspannung entladen wird. Dadurch kann sichergestellt werden, dass der Akkupack während des Transports und einer eventuellen Lagerung einen sehr geringen Energieinhalt aufweist. Insbesondere ist vorgesehen, dass diese abgesenkte Entladeschlussspannung niedriger ist als die zuvor erwähnte abgesenkte Entladeschlussspannung.

In weiterer vorteilhafter Ausgestaltung der Erfindung ist es vorgesehen, dass die Steuereinrichtung dazu eingerichtet ist, eine Entladeschlussspannung des Akkupacks über einen für einen herkömmlichen Betrieb des Akkupacks vorgesehenen Wert anzuheben. Insbesondere ist es besonders bevorzugt vorgesehen, dass diese angehobene Entladeschlussspannung unter der zuvor erwähnten abgesenkten Entladeschlussspannung liegt. Der Vorteil bei dieser Vorgehensweise liegt darin, dass beispielsweise während eines Transports des Akkupacks ungewollte Stromflüsse nur solange erfolgen können, bis die angehobene Entladeschlussspannung des Akkupacks erreicht worden ist. Auf diese Weise kann sichergestellt werden, dass der Akkupack insbesondere während eines Transports und einer eventuellen sich daran anschließenden Lagerung nur so weit Energie bereitstellen kann, bis die angehobene Entladeschlussspannung erreicht worden ist. Auf diese Weise kann beispielsweise verhindert werden, dass eine zu starke Hitzeentwicklung aufgrund von einem Stromabfluss aus dem Akkupack erfolgt, da die Entladeschlussspannung über dem im herkömmlichen Betrieb des Akkupacks vorgesehenem Wert liegt.

Eine weitere vorteilhafte Ausführungsform der Erfindung sieht vor, dass eine Benutzerschnittstelle des Akkupacks dazu eingerichtet ist, das Freischaltsignal an die Steuereinrichtung zu übermitteln, wenn ein vorgegebener Freischaltcode an der Benutzerschnittstelle eingegeben worden ist. Beispielsweise kann die Benutzerschnittstelle verschiedene Tasten aufweisen, über welche ein Benutzer manuell den Freischaltcode eingeben kann. Genauso gut ist es auch möglich, dass der Akkupack beispielsweise einen Touchscreen aufweist, über welchen ein Benutzer den Freischaltcode eingeben kann. Nur wenn der Benutzer also den Freischaltcode kennt, kann das Freischaltsignal an die Steuereinrichtung übermittelt werden, infolgedessen dann erst die Begrenzung auf den reduzierten Energiewert aufgehoben wird.

In weiterer vorteilhafter Ausgestaltung der Erfindung ist es vorgesehen, dass eine Kommunikationsschnittstelle des Akkupacks dazu eingerichtet ist, das Freischaltsignal an die Steuereinrichtung zu übermitteln, wenn die Kommunikationsschnittstelle das Freischaltsignal empfangen hat. Insbesondere ist die Kommunikationsschnittstelle dazu eingerichtet, das Freischaltsignal über Bluetooth, W-LAN oder WAN zu empfangen. So kann beispielsweise ein Benutzer des Akkupacks dafür sorgen, dass das Freischaltsignal an die Kommunikationsschnittstelle übermittelt wird. In diesem Zusammenhang kann es ebenfalls vorgesehen sein, dass der Benutzer den zuvor bereits erwähnten Freischaltcode kennen muss, um diesen beispielsweise über sein Smartphone oder über seinen Computer einzugeben, infolgedessen dann erst das Smartphone beziehungsweise sein Computer das Freischaltsignal an die Kommunikationsschnittstelle des Akkupacks überträgt. Eine automatisierte Übermittlung des Freischaltsignals an die Kommunikationsschnittstelle des Akkupacks ist ebenfalls denkbar. Beispielsweise ist es möglich, dass über die Kommunikationsschnittstelle des Akkupacks ein Standort des Akkupacks erkennbar ist - zum Beispiel über eine Einwahl in eine Mobilfunkzelle oder eine WLAN. Wird festgestellt, dass der Akkupack zum Beispiel an einem bestimmungsgemäßen Ort angekommen ist, so kann die Kommunikationsschnittstelle diese Information beispielsweise an eine Servereinrichtung eines Herstellers des Akkupacks übermitteln, infolgedessen die Servereinrichtung dann wiederum das Freischaltsignal an den Akkupack übermittelt. So wäre es auch ohne menschliches Zutun auf einfache und zuverlässige Weise möglich, die Begrenzung der bauartbedingt speicherbaren Energie des Akkupacks aufzuheben, sobald der Akkupack beispielsweise an einem bestimmungsgemäßen Ort angekommen ist.

Eine weitere vorteilhafte Ausführungsform der Erfindung sieht vor, dass der Akkupack eine Schnittstelle zum elektrischen Kontaktieren des Akkupacks mit dem Elektrogerät aufweist, wobei die Schnittstelle dazu eingerichtet ist, das Freischaltsignal an die Steuereinrichtung zu übermitteln, wenn die Schnittstelle elektrisch mit dem Elektrogerät verbunden worden ist. Beispielsweise kann der Akkupack über die besagte Schnittstelle in das Elektrogerät eingesteckt werden, sodass über die Schnittstelle eine elektrische Kontaktierung mit dem Elektrogerät erfolgt. Darüber hinaus weist die Schnittstelle vorzugsweise auch Mittel zur mechanischen Fixierung am Elektrogerät auf. Sobald der Akkupack in das Elektrogerät eingesteckt worden ist, kann es vorgesehen sein, dass das Elektrogerät das besagte Freischaltsignal über die Schnittstelle an die Steuereinrichtung überträgt. In diesem Zusammenhang kann es beispielsweise vorgesehen sein, dass eine Art Autorisierung beziehungsweise Identifizierung vorgeschaltet ist, sodass sichergestellt werden kann, dass nicht jedes beliebige Elektrogerät den Akkupack wieder freischalten kann, damit die Steuereinrichtung die Begrenzung auf den reduzierten Energiewert aufhebt. Zudem ist es beispielsweise auch möglich, dass ein Dongle oder dergleichen in den Akkupack eingesteckt werden muss, um das Freischaltsignal zu generieren. Dadurch kann sichergestellt werden, dass die Reduzierung der mittels des Akkupacks speicherbaren beziehungsweise bereitstellbaren Energie nur dann aufgehoben werden kann, wenn ein Benutzer diesen Dongle zur Verfügung hat. Beispielsweise wäre es denkbar dass beim Transport der Akkupacks die Akkupacks und die besagten Dongle getrennt transportiert werden. Erst wenn Akkupacks und Dongle am gemeinsamen Bestimmungsort angekommen sind, ist es überhaupt möglich, durch Einstecken der Dongle das Freischaltsignal an die Steuereinrichtung zu übermitteln. Die vorstehend genannten Mechanismen zur Generierung des Freischaltsignals können sowohl einzeln als auch in unterschiedlichsten Kombinationen miteinander zu Anwendung kommen.

In weiterer vorteilhafter Ausgestaltung der Erfindung ist es vorgesehen, dass die Steuereinrichtung dazu eingerichtet ist, nach dem Aufheben der Begrenzung die mittels des Akkupacks bauartbedingt speicherbare Energie erneut auf den vorgebbaren reduzierten Energiewert zu begrenzen. So ist es jederzeit möglich, wieder einen transport- und lagersicheren Akkupack zur Verfügung zu stellen, selbst wenn dieser zwischendurch auf herkömmliche Art benutzt worden ist, nämlich weil die Begrenzung auf den reduzierten Energiewert zwischenzeitlich aufgehoben worden war. Soll der Akkupack beispielsweise zu Wartungs- oder Reparaturzwecken eingeschickt werden, so kann die Steuereinrichtung die bauartbedingt speicherbare Energie des Akkupacks ganz einfach wieder auf den vorgebbaren reduzierten Energiewert begrenzen. Beispielsweise kann ein Benutzer in diesem Zusammenhang noch über ein Display des Akkupacks und/oder akustisch mitgeteilt bekommen, dass er seinen Akkupack vor dem Einschicken zu Wartungs- beziehungsweise Reparaturzwecken noch soweit entladen soll, bis der vorgebbare reduzierte Energiewert unterschritten worden ist. Das Unterschreiten des reduzierten Energiewerts kann vorzugsweise ebenfalls am Akkupack signalisiert werden.

Gemäß einer weiteren vorteilhaften Ausgestaltung der Erfindung ist es vorgesehen, dass die Steuereinrichtung ein Batteriemanagementsystem des Akkupacks oder Teil des Batteriemanagementsystems des Akkupacks ist. Das Batteriemanagementsystem des Akkupacks kann ohnehin verschiedenste Parameter des Akkupacks beeinflussen. Dadurch, dass die Steuereinrichtung des Batteriemanagementsystems selbst oder zumindest ein Teil des Batteriemanagementsystems ist, müssen zur Umsetzung der erfindungsgemäßen Lösung keine weiteren Bauteile im Akkupack vorgesehen werden.

Die Steuereinrichtung für einen Akkupack oder ein Ladegerät ist dazu eingerichtet, eine mittels des Akkupacks bauartbedingt speicherbare Energie auf einen vorgebbaren reduzierten Energiewert zu begrenzen und die Begrenzung nur dann aufzuheben, sodass nach einem entsprechenden Ladevorgang die bauartbedingt speicherbare Energie des Akkupacks wieder bereitstellbar ist, wenn mittels der Steuereinrichtung wenigstens ein vorgegebenes Freischaltsignal empfangen worden ist. Vorteilhafte Ausgestaltungen des erfindungsgemäßen Akkupacks sind als vorteilhafte Ausgestaltungen der Steuereinrichtung anzusehen, wobei die Steuereinrichtung insbesondere Mittel zur Umsetzung der bevorzugten Ausführungsformen des vorstehend erwähnten Akkupacks aufweist.

Bei dem erfindungsgemäßen Verfahren zum Betreiben des erfindungsgemäßen Akkupacks oder einer vorteilhaften Ausführungsform des erfindungsgemäßen Akkupacks wird mittels der Steuereinrichtung eine mittels des Akkupacks bauartbedingt speicherbare Energie auf einen vorgegebenen reduzierten Energiewert begrenzt und danach die Begrenzung mittels der Steuereinrichtung nur dann aufgehoben, sodass nach einem entsprechenden Ladevorgang die bauartbedingt speicherbare Energie des Akkupacks wieder bereitstellbar ist, wenn mittels der Steuereinrichtung wenigstens ein vorgegebenes Freischaltsignal empfangen worden ist. Wie zuvor bereits erwähnt, ist es alternativ oder zusätzlich auch möglich, dass ein Ladegerät die Begrenzung der mittels des Akkupacks bauartbedingt speicherbaren Energie auf den vorgegebenen reduzierten Energiewert vornimmt. Vorteilhafte Ausgestaltungen des erfindungsgemäßen Akkupacks sind als vorteilhafte Ausgestaltungen des erfindungsgemäßen Verfahrens und umgekehrt anzusehen, wobei der Akkupack insbesondere Mittel zur Durchführung der Verfahrensschritte aufweist. Gleiches gilt auch für die vorstehend erwähnte Steuereinrichtung.

Eine vorteilhafte Ausführungsform des Verfahrens sieht vor, dass der mittels des Akkupacks speicherbare Energieinhalt automatisch auf den vorgegebenen Energiewert begrenzt wird, sobald der Akkupack erstmals in Betrieb genommen wird. Beispielsweise kann die erstmalige Inbetriebnahme des Akkupacks noch im Rahmen der Produktion des Akkupacks oder direkt im Anschluss daran erfolgen, sodass in dem Fall automatisch sichergestellt werden kann, dass der mittels des Akkupacks speicherbare Energieinhalt automatisch auf den vorgegebenen Energiewert begrenzt wird, vorzugsweise noch bevor der Akkupack ein erstes Mal aufgeladen wird.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine stark schematisierte Darstellung eines Akkupacks für ein Elektrogerät, welcher eine Steuereinrichtung aufweist, die dazu eingerichtet ist, eine mittels des Akkupacks bauartbedingt speicherbare Energie auf einen vorgebbaren reduzierten Energiewert zu begrenzen und die Begrenzung wiederum aufzuheben;
- Fig. 2: ein Diagramm, in welchem eine mittels des Akkupacks speicherbare Energie über der Zeit aufgetragen ist.

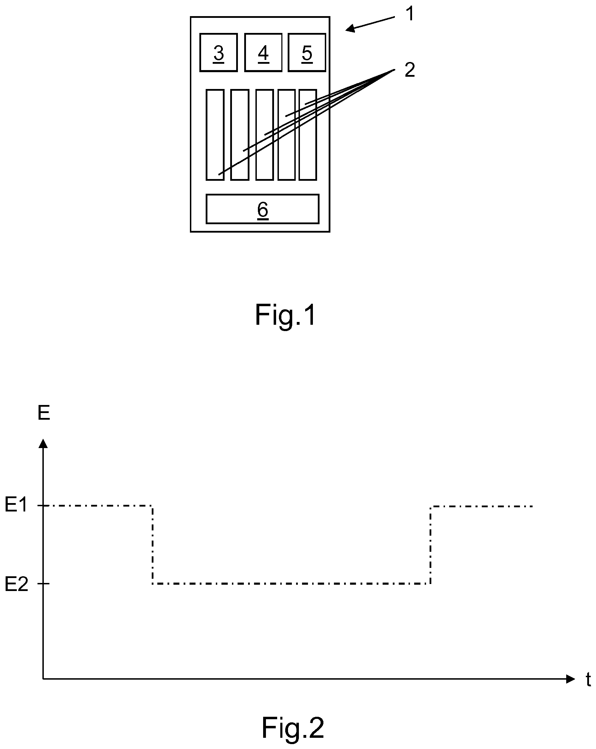

Ein Akkupack 1 für ein Elektrogerät ist in einer stark schematisierten Darstellung in Fig. 1 gezeigt. Der Akkupack 1 ist vorzugsweise dazu ausgelegt, ein elektrisches Handwerkzeug und/oder ein elektrisches Gartengerät mit Energie zu versorgen. Beispielsweise kann der Akkupack 1 dazu verwendet werden, eine akkubetriebene Handkreissäge, eine akkubetriebene Heckenschere, einen akkubetrieben Winkelschleifer und dergleichen mit Energie zu versorgen. Darüber hinaus kann der Akkupack 1 auch dazu geeignet sein, beispielsweise einen elektrischen Rasenmäher, einen elektrischen Vertikutierer oder dergleichen mit Energie zu versorgen. Zur Energieversorgung der besagten Elektrogeräte können auch mehrere der Akkupacks 1 gleichzeitig eingesetzt werden.

Der Akkupack 1 umfasst mehrere Batteriezellen 2, welche vorzugsweise Lithium-Ionen-Zellen sind. Die Batteriezellen 2 können aber auch auf einer anderen Zellchemie basieren.

In Fig. 2 ist in einem Diagramm gezeigt, in welchem eine mittels des Akkupacks 1 bereitstellbare Energie E über der Zeit t aufgetragen ist. Der Akkupack 1 umfasst eine Steuereinrichtung 3, welche dazu eingerichtet ist, eine mittels des Akkupacks 1 bauartbedingt speicherbare Energie E1 auf einen vorgebbaren reduzierten Energiewert E2 zu begrenzen. Zudem ist die Steuereinrichtung 3 dazu eingerichtet, die Begrenzung nur dann aufzuheben, sodass nach einem entsprechenden Ladevorgang die bauartbedingt speicherbare Energie E1 des Akkupacks 1 wieder bereitstellbar ist, wenn mittels der Steuereinrichtung 3 wenigstens ein vorgegebenes Freischaltsignal empfangen worden ist.

Beispielsweise kann die Steuereinrichtung 3 die Begrenzung auf den reduzierten Energiewert E2 dann vornehmen, sobald mittels der Steuereinrichtung 3 ein vorgegebenes Begrenzungssignal empfangen worden ist und/oder wenn der Akkupack 1 erstmalig in Betrieb genommen wird. So ist es beispielsweise möglich, dass der Akkupack 1 in einem letzten Produktionsschritt mit dem Begrenzungssignal versorgt wird, sodass das Begrenzungssignal mittels der Steuereinrichtung 3 empfangen wird. Infolgedessen reduziert die Steuereinrichtung 3 die bauartbedingt speicherbare Energie E1 auf den vorgebbaren reduzierten Energiewert E2. So kann der Akkupack 1 auch nur bis zum Erreichen des reduzierten Energiewerts E2 aufgeladen werden. Gleiches kann auch geschehen, wenn der Akkupack 1 erstmalig in Betrieb genommen wird, beispielsweise in Form eines standardisierten Testverfahrens des Akkupacks 1, welches sich an die eigentliche Herstellung des Akkupacks 1 standardmäßig anschließen kann.

Insbesondere kann die Steuereinrichtung 3 zur Begrenzung auf den reduzierten Energiewert E2 eine Ladeschlussspannung des Akkupacks soweit herabsetzen, dass beim Laden des Akkupacks 1 der reduzierte Energiewert E2 gar nicht überschritten werden kann. Auf diese Weise kann zuverlässig sichergestellt werden, dass der Akkupack 1 gar nicht über den reduzierten Energiewert E2 hinaus aufgeladen werden kann.

Die Steuereinrichtung 3 kann zudem eine Entladeschlussspannung des Akkupacks 1 unter einen für einen herkömmlichen Betrieb des Akkupacks 1 vorgesehenen Wert absenken. So kann es beispielsweise vorgesehen sein, dass der Akkupack 1 vor einem Transport entladen wird, und zwar bis die abgesenkte Entladeschlussspannung erreicht wird. Diese liegt vorzugsweise noch unterhalb der zuvor erwähnten reduzierten Ladeschlussspannung. In dem Fall kann sichergestellt werden, dass der Akkupack 1 einen besonders niedrigen Energieinhalt beziehungsweise eine besonders niedrige Energiemenge aufweist, bevor der Akkupack 1 transportiert wird.

Umgekehrt ist es aber auch möglich, dass die Steuereinrichtung 3 die Entladeschlussspannung des Akkupacks 1 über für einen herkömmlichen Betrieb des Akkupacks 1 vorgesehenen Wert anhebt. Diese angehobene Entladeschlussspannung liegt vorzugsweise wiederum unterhalb der zuvor erwähnten reduzierten Ladeschlussspannung. Diese Vorgehensweise kann den Vorteil mit sich bringen, dass falls es während des Transports oder während der Ladung des Akkupacks 1 zu einer unerwünschten Kontaktierung des Akkupacks 1 kommt, der Akkupack 1 lediglich nur so lange Energie bereitstellen beziehungsweise abgeben kann, bis die angehobene Entladeschlussspannung erreicht wird. Dadurch kann einer zu starken Wärmeentwicklung entgegengewirkt werden, da der Akkupack 1 schlichtweg keine Energie mehr abgibt, sobald die angehobene Entladeschlussspannung erreicht wird.

Ist der Akkupack 1 beispielsweise nach einem Transport an einem bestimmungsgemäßen Ort angelangt, so kann zum Beispiel über eine Benutzerschnittstelle 4 des Akkupacks 1 ein Freischaltcode manuell eingegeben werden, infolgedessen Benutzerschnittstelle 4 ein Freischaltsignal an die Steuereinrichtung 3 übermittelt. Infolgedessen hebt die Steuereinrichtung 3 die Begrenzung auf den reduzierten Energiewert E2 auf, sodass nach einem entsprechenden Ladevorgang des Akkupacks 1 dieser wieder die bauartbedingt speicherbare Energie E1 bereitstellen kann. Die Benutzerschnittstelle 4 kann beispielsweise Nummerntasten, Buchstabentasten oder dergleichen aufweisen, über welche ein Benutzer den Freischaltcode eingeben kann. Genauso kann die Benutzerschnittstelle 4 beispielsweise auch ein Touchscreen zur Eingabe des Freischaltcodes aufweisen.

Es ist auch möglich, dass eine Kommunikationsschnittstelle 5 des Akkupacks 1 das besagte Freischaltsignal an die Steuereinrichtung 3 übermittelt, wenn die Kommunikationsschnittstelle 5 das Freischaltsignal empfangen hat. So ist es beispielsweise denkbar, dass ein Benutzer aus der Ferne das Freischaltsignal an die Kommunikationsschnittstelle 5 übertragen kann. Dafür kann es beispielsweise vorgesehen sein, dass er an seinem Smartphone über eine geeignete App oder beispielsweise auch browserbasiert an seinem Computer den besagten Freischaltcode zur Verfügung haben und eingeben muss, infolgedessen dann das Freischaltsignal beispielsweise über Bluetooth, WLAN oder WAN an die Kommunikationsschnittstelle 5 des Akkupacks 1 übermittelt wird infolgedessen dann wiederum die Begrenzung auf den reduzierten Energiewert E2 aufgehoben wird.

Der Akkupack 1 umfasst zudem eine Schnittstelle 6 zum elektrischen Kontaktieren des Akkupacks 1 mit einem Elektrogerät. Die Schnittstelle 6 kann dazu eingerichtet sein, das Freischaltsignal an die Steuereinrichtung 3 zu übermitteln, wenn die Schnittstelle 6 elektrisch mit dem Elektrogerät verbunden worden ist. Wird der Akkupack 1 beispielsweise nach einem Transport und nach dem Ankommen an einem bestimmungsgemäßen Ort in ein Elektrogerät über die Schnittstelle 6 eingesteckt, so kann ein Datenaustausch zwischen dem Elektrogerät und dem Akkupack 1 über die Schnittstelle 6 erfolgen, wobei in diesem Zusammenhang dann auch das Freischaltsignal an die Steuereinrichtung 3 übertragen wird.

Nach dem Aufheben der Begrenzung kann die Steuereinrichtung 3 die mittels des Akkupacks 1 bauartbedingt speicherbare Energie E1 erneut auch wiederum auf den vorgebbaren reduzierten Energiewert E2 begrenzen. Beispielsweise ist es denkbar, dass ein Kunde den Akkupack 1 zur Wartung oder zur Reparatur einschicken möchte. In dem Fall kann er beispielsweise am Akkupack 1 die Benutzerschnittstelle 4 entsprechend betätigen, infolgedessen die Steuereinrichtung 3, die mittels des Akkupacks 1 bauartbedingt speicherbare Energie E1 wiederum auf den vorgebbaren reduzierten Energiewert E2 begrenzt. In diesem Zusammenhang kann es beispielsweise auch noch vorgesehen sein, dass der Benutzer akustisch und/oder optisch mittels des Akkupacks 1 darüber in Kenntnis gesetzt wird, dass nun nur noch die reduzierte Energiemenge bereitgestellt werden kann und der Benutzer - sofern erforderlich - vor dem Verschicken des Akkupacks 1 diesen noch soweit entleeren soll, bis der reduzierte Energiewert E2 erreicht wird.

Insbesondere kann die Steuereinrichtung 3 Teil eines hier nicht näher bezeichneten Batteriemanagementsystems des Akkupacks 1 sein oder das Batteriemanagementsystem selbst sein. Der Vorteil dabei ist, dass das Batteriemanagementsystem des Akkupacks 1 ohnehin unterschiedlichste Parameter des Akkupacks 1 beeinflussen kann, sodass das vorstehend genannte Vorgehen auf einfache Weise mittels des Batteriemanagementsystems übernommen werden kann.

Die beschriebene Vorgehensweise und der beschriebene Akkupack 1 können zwei ganz unterschiedliche beziehungsweise gegensätzliche Anforderungen gleichermaßen erfüllen. Einerseits kann während eines Transports und auch während einer Lagerung des Akkupacks 1 sichergestellt werden, dass dieser einen besonders niedrigen Energieinhalt aufweist, sodass dieser besonders sicher transportiert beziehungsweise gelagert werden kann. Zum anderen kann auch sichergestellt werden, dass der Akkupack 1 nach einem Transport beziehungsweise nach einer Lagerung im Zuge seiner eigentlichen Verwendung besonders viel Energie bereitstellen kann.

### BEZUGSZEICHENLISTE:

- 1: Akkupack
- 2: Batteriezelle
- 3: Steuereinrichtung
- 4: Benutzerschnittstelle
- 5: Kommunikationsschnittstelle
- 6: Schnittstelle
- E: Energie
- E1: bauartbedingt speicherbare Energie des Akkupacks
- E2: reduzierter Energiewert des Akkupacks
- t: Zeit

## Patentansprüche

1. Akkupack (1) für ein Elektrogerät, insbesondere für ein elektrisches Handwerkzeug und/oder elektrisches Gartengerät, umfassend mehrere Batteriezellen (2) und eine Steuereinrichtung (3), welche dazu eingerichtet ist,
- eine mittels des Akkupacks (1) bauartbedingt speicherbare Energie (E1) auf einen vorgebbaren reduzierten Energiewert (E2) zu begrenzen, so dass der Akkupack (1) auch nur bis zum Erreichen des reduzierten Energiewerts (E2) aufladbar ist;
- die Begrenzung nur dann aufzuheben, sodass nach einem entsprechenden Ladevorgang die bauartbedingt speicherbare Energie (E1) des Akkupacks (1) wieder bereitstellbar ist, wenn mittels der Steuereinrichtung (3) wenigstens ein vorgegebenes Freischaltsignal empfangen worden ist.

2. Akkupack (1) nach Anspruch 1,
**dadurch gekennzeichnet, dass**
die Steuereinrichtung (3) dazu eingerichtet ist, die Begrenzung auf den reduzierten Energiewert (E2) vorzunehmen, wenn mittels der Steuereinrichtung (3) ein vorgegebenes Begrenzungssignal empfangen worden ist und/oder wenn der Akkupack (1) erstmalig in Betrieb genommen wird.

3. Akkupack (1) nach Anspruch 1 oder 2,
**dadurch gekennzeichnet, dass**
die Steuereinrichtung (3) dazu eingerichtet ist, zur Begrenzung auf den reduzierten Energiewert (E2) eine Ladeschlussspannung des Akkupacks (1) so weit herabzusetzen, dass beim Laden des Akkupacks (1) der reduzierte Energiewert (E2) nicht überschritten werden kann.

4. Akkupack (1) nach einem der vorhergehenden Ansprüche,
**dadurch gekennzeichnet, dass**
die Steuereinrichtung (3) dazu eingerichtet ist, eine Entladeschlussspannung des Akkupacks (1) unter einen für einen vorgegebenen Betrieb des Akkupacks (1) vorgesehenen Wert abzusenken.

5. Akkupack (1) nach einem der vorhergehenden Ansprüche,
**dadurch gekennzeichnet, dass**
die Steuereinrichtung (3) dazu eingerichtet ist, eine Entladeschlussspannung des Akkupacks (1) über einen für einen vorgegebenen Betrieb des Akkupacks (1) vorgesehenen Wert anzuheben.

6. Akkupack (1) nach einem der vorhergehenden Ansprüche,
**dadurch gekennzeichnet, dass**
eine Benutzerschnittstelle (4) des Akkupacks (1) dazu eingerichtet ist, das Freischaltsignal an die Steuereinrichtung (3) zu übermitteln, wenn ein vorgegebener Freischaltcode an der Benutzerschnittstelle (4) eingegeben worden ist.

7. Akkupack (1) nach einem der vorhergehenden Ansprüche,
**dadurch gekennzeichnet, dass**
eine Kommunikationsschnittstelle (5) des Akkupacks (1) dazu eingerichtet ist, das Freischaltsignal an die Steuereinrichtung (3) zu übermitteln, wenn die Kommunikationsschnittstelle (5) das Freischaltsignal empfangen hat.

8. Akkupack (1) nach Anspruch 7,
**dadurch gekennzeichnet, dass**
die Kommunikationsschnittstelle (5) dazu eingerichtet ist, das Freischaltsignal über Bluetooth, WLAN oder WAN zu empfangen.

9. Akkupack (1) nach einem der vorhergehenden Ansprüche,
**dadurch gekennzeichnet, dass**
der Akkupack (1) eine Schnittstelle (6) zum elektrischen Kontaktieren des Akkupacks (1) mit dem Elektrogerät aufweist, wobei die Schnittstelle (6) dazu eingerichtet ist, das Freischaltsignal an die Steuereinrichtung (3) zu übermitteln, wenn die Schnittstelle (6) elektrisch mit dem Elektrogerät verbunden worden ist.

10. Akkupack (1) nach einem der vorhergehenden Ansprüche,
**dadurch gekennzeichnet, dass**
die Steuereinrichtung (3) dazu eingerichtet ist, nach dem Aufheben der Begrenzung die mittels des Akkupacks (1) bauartbedingt speicherbare Energie (E1) erneut auf den vorgebbaren reduzierten Energiewert (E2) zu begrenzen.

11. Akkupack (1) nach einem der vorhergehenden Ansprüche,
**dadurch gekennzeichnet, dass**
die Steuereinrichtung (3) ein Batteriemanagementsystem des Akkupacks (1) oder Teil des Batteriemanagementsystems des Akkupacks (1) ist.

12. Ladegerät zum Aufladen eines vorgegebenen Akkupacks (1), wobei das Ladegerät dazu eingerichtet ist,
- eine mittels des vorgegebenen Akkupacks (1) bauartbedingt speicherbare Energie (E1) auf einen vorgebbaren reduzierten Energiewert (E2) zu begrenzen, so dass der vorgegebene Akkupack (1) auch nur bis zum Erreichen des reduzierten Energiewerts (E2) aufladbar ist;
- die Begrenzung nur dann aufzuheben, sodass nach einem entsprechenden Ladevorgang die bauartbedingt speicherbare Energie (E1) des vorgegebenen Akkupacks (1) wieder bereitstellbar ist, wenn mittels des Ladegeräts wenigstens ein vorgegebenes Freischaltsignal empfangen worden ist.

13. Verfahren zum Betreiben eines Akkupacks (1) nach einem der Ansprüche 1 bis 11, bei welchem mittels der Steuereinrichtung (3) eine mittels des Akkupacks (1) bauartbedingt speicherbare Energie (E1) auf einen vorgegebenen reduzierten Energiewert (E2) begrenzt, so dass der vorgegebene Akkupack (1) auch nur bis zum Erreichen des reduzierten Energiewerts (E2) aufgeladen wird, und danach die Begrenzung mittels der Steuereinrichtung (3) nur dann aufgehoben wird, sodass nach einem entsprechenden Ladevorgang die bauartbedingt speicherbare Energie (E1) des Akkupacks (1) wieder bereitstellbar ist, wenn mittels der Steuereinrichtung (3) wenigstens ein vorgegebenes Freischaltsignal empfangen worden ist.

14. Verfahren nach Anspruch 13,
**dadurch gekennzeichnet, dass**
der mittels des Akkupacks (1) speicherbare Energieinhalt automatisch auf den vorgegebenen Energiewert (E2) begrenzt wird, sobald der Akkupack (1) erstmals in Betrieb genommen wird.

## Claims

1. A battery pack (1) for an electrical appliance, in particular for an electrical hand tool and/or an electrical gardening tool, including multiple battery cells (2) and a control device (3), which is configured
- to limit an energy (E1) storable design-related by means of the battery pack (1) to a presettable reduced energy value (E2) such that the battery pack (1) is only chargeable until reaching the reduced energy value (E2);
- to cancel the limitation, such that the energy (E1) of the battery pack (1) storable design-related can again be provided after a corresponding charging operation, only if at least one preset enable signal has been received by means of the control device (3).

2. The battery pack (1) according to claim 1,
**characterized in that**
the control device (3) is configured to perform the limitation to the reduced energy value (E2) if a preset limitation signal has been received by means of the control device (3) and/or if the battery pack (1) is put into operation for the first time.

3. The battery pack (1) according to claim 1 or 2,
**characterized in that**
the control device (3) is configured to reduce an end-of-charge voltage of the battery pack (1) for limiting to the reduced energy value (E2) to the point that the reduced energy value (E2) cannot be exceeded in charging the battery pack (1).

4. The battery pack (1) according to any one of the preceding claims,
**characterized in that**
the control device (3) is configured to decrease an end-of-discharge voltage of the battery pack (1) below a value provided for a preset operation of the battery pack (1).

5. The battery pack (1) according to any one of the preceding claims,
**characterized in that**
the control device (3) is configured to raise an end-of-discharge voltage of the battery pack (1) above a value provided for a preset operation of the battery pack (1).

6. The battery pack (1) according to any one of the preceding claims,
**characterized in that**
a user interface (4) of the battery pack (1) is configured to communicate the enable signal to the control device (3) if a preset enable code has been entered at the user interface (4).

7. The battery pack (1) according to any one of the preceding claims,
**characterized in that**
a communication interface (5) of the battery pack (1) is configured to communicate the enable signal to the control device (3) if the communication interface (5) has received the enable signal.

8. The battery pack (1) according to claim 7,
**characterized in that**
the communication interface (5) is configured to receive the enable signal via Bluetooth, WLAN or WAN.

9. The battery pack (1) according to any one of the preceding claims,
**characterized in that**
the battery pack (1) comprises an interface (6) for electrically contacting the battery pack (1) with the electrical appliance, wherein the interface (6) is configured to communicate the enable signal to the control device (3) if the interface (6) has been electrically connected to the electrical appliance.

10. The battery pack (1) according to any one of the preceding claims, **characterized in that**
the control device (3) is configured to again limit the energy (E1) storable design-related by means of the battery pack (1) to the presettable reduced energy value (E2) after cancelling the limitation.

11. The battery pack (1) according to any one of the preceding claims,
**characterized in that**
the control device (3) is a battery management system of the battery pack (1) or part of the battery management system of the battery pack (1).

12. A charging device for charging a preset battery pack (1), wherein the charging device is configured
- to limit an energy (E1) storable design-related by means of the preset battery pack (1) to a presettable reduced energy value (E2) such that the preset battery pack (1) is only chargeable until reaching the reduced energy value (E2);
- to cancel the limitation, such that the energy (E1) of the preset battery pack (1) storable design-related can again be provided after a corresponding charging operation, only if at least one preset enable signal has been received by means of the charging device.

13. A method for operating a battery pack (1) according to any one of claims 1 to 11, in which an energy (E1) storable design-related by means of the battery pack (1) is limited to a preset reduced energy value (E2) by means of the control device (3) such that the preset battery pack (1) is only charged until reaching the reduced energy value (E2), and thereafter the limitation is cancelled by means of the control device (3), such that the energy (E1) of the battery pack (1) storable design-related can again be provided after a corresponding charging operation, only if at least one preset enable signal has been received by means of the control device (3).

14. The method according to claim 13,
**characterized in that**
the energy content storable by means of the battery pack (1) is automatically limited to the preset energy value (E2) as soon as the battery pack (1) is put into operation for the first time.

## Revendications

1. Bloc d'accumulateur (1) pour un appareil électrique, en particulier pour un outil à main électrique et/ou un outil de jardinage électrique, comprenant plusieurs éléments de batterie (2) et un dispositif de commande (3) qui est aménagé pour
- limiter une énergie (E1) pouvant être accumulée en fonction du modèle au moyen du bloc d'accumulateur (1) à une valeur d'énergie réduite (E2) prédéfinissable de sorte que le bloc d'accumulateur (1) ne peut être rechargé en effet que jusqu'à ce que la valeur d'énergie réduite (E2) soit atteinte ;
- annuler la limitation uniquement dans ce cas, de sorte qu'après un processus de charge correspondant, l'énergie (E1) du bloc d'accumulateur (1) pouvant être accumulée en fonction du modèle peut être fournie à nouveau si le dispositif de commande (3) a reçu au moins un signal de déblocage prédéfini.

2. Bloc d'accumulateur (1) selon la revendication 1, **caractérisé en ce que** le dispositif de commande (3) est aménagé pour procéder à la limitation à la valeur d'énergie réduite (E2) si le dispositif de commande (3) a reçu un signal de limitation prédéfini et/ou si le bloc d'accumulateur (1) est mis en service pour la première fois.

3. Bloc d'accumulateur (1) selon la revendication 1 ou 2, **caractérisé en ce qu'**en vue de la limitation à la valeur d'énergie réduite (E2), le dispositif de commande (3) est aménagé pour abaisser une tension finale de charge du bloc d'accumulateur (1) à tel point que la valeur d'énergie réduite (E2) ne peut être dépassée lors du chargement du bloc d'accumulateur (1).

4. Bloc d'accumulateur (1) selon l'une quelconque des revendications précédentes, **caractérisé en ce que** le dispositif de commande (3) est aménagé pour abaisser une tension finale de décharge du bloc d'accumulateur (1) au-dessous d'une valeur prévue pour un fonctionnement prédéfini du bloc d'accumulateur (1).

5. Bloc d'accumulateur (1) selon l'une quelconque des revendications précédentes, **caractérisé en ce que** le dispositif de commande (3) est aménagé pour relever une tension finale de décharge du bloc d'accumulateur (1) au-dessus d'une valeur prévue pour un fonctionnement prédéfini du bloc d'accumulateur (1).

6. Bloc d'accumulateur (1) selon l'une quelconque des revendications précédentes, **caractérisé en ce qu'**une interface utilisateur (4) du bloc d'accumulateur (1) est aménagée pour transmettre le signal de déblocage au dispositif de commande (3) si un code de déblocage prédéfini a été entré au niveau de l'interface utilisateur (4).

7. Bloc d'accumulateur (1) selon l'une quelconque des revendications précédentes, **caractérisé en ce qu'**une interface de communication (5) du bloc d'accumulateur (1) est aménagée pour transmettre le signal de déblocage au dispositif de commande (3) si l'interface de communication (5) a reçu le signal de déblocage.

8. Bloc d'accumulateur (1) selon la revendication 7, **caractérisé en ce que** l'interface de communication (5) est aménagée pour recevoir le signal de déblocage par Bluetooth, WLAN ou WAN.

9. Bloc d'accumulateur (1) selon l'une quelconque des revendications précédentes, **caractérisé en ce que** le bloc d'accumulateur (1) présente une interface (6) pour la mise en contact électrique du bloc d'accumulateur (1) avec l'appareil électrique, l'interface (6) étant aménagée pour transmettre le signal de déblocage au dispositif de commande (3) si l'interface (6) a été reliée électriquement à l'appareil électrique.

10. Bloc d'accumulateur (1) selon l'une quelconque des revendications précédentes, **caractérisé en ce qu'**après l'annulation de la limitation, le dispositif de commande (3) est aménagé pour limiter à nouveau l'énergie (E1) pouvant être accumulée en fonction du modèle au moyen du bloc d'accumulateur (1) à la valeur d'énergie réduite (E2) prédéfinissable.

11. Bloc d'accumulateur (1) selon l'une quelconque des revendications précédentes, **caractérisé en ce que** le dispositif de commande (3) est un système de gestion de batterie du bloc d'accumulateur (1) ou fait partie du système de gestion de batterie du bloc d'accumulateur (1) .

12. Chargeur permettant de recharger un bloc d'accumulateur (1) prédéfini, le chargeur étant aménagé pour
- limiter une énergie (E1) pouvant être accumulée en fonction du modèle au moyen du bloc d'accumulateur (1) prédéfini à une valeur d'énergie réduite (E2) prédéfinissable de sorte que le bloc d'accumulateur (1) prédéfini ne peut être rechargé en effet que jusqu'à ce que la valeur d'énergie réduite (E2) soit atteinte ;
- annuler la limitation uniquement dans ce cas, de sorte qu'après un processus de charge correspondant, l'énergie (E1) du bloc d'accumulateur (1) prédéfini pouvant être accumulée en fonction du modèle peut être fournie à nouveau si le chargeur a reçu au moins un signal de déblocage prédéfini.

13. Procédé permettant de faire fonctionner un bloc d'accumulateur (1) selon l'une quelconque des revendications 1 à 11, dans lequel le dispositif de commande (3) limite une énergie (E1) pouvant être accumulée en fonction du modèle au moyen du bloc d'accumulateur (1) à une valeur d'énergie réduite (E2) prédéfinie de sorte que le bloc d'accumulateur (1) prédéfini ne peut en effet être rechargé que jusqu'à ce que la valeur d'énergie réduite (E2) soit atteinte, et ensuite la limitation n'est annulée au moyen du dispositif de commande (3) que dans ce cas de sorte qu'après un processus de chargement correspondant, l'énergie (E1) du bloc d'accumulateur (1) pouvant être accumulée en fonction du modèle peut à nouveau être fournie si le dispositif de commande (3) a reçu au moins un signal de déblocage prédéfini.

14. Procédé selon la revendication 13, **caractérisé en ce que** le contenu énergétique pouvant être accumulé au moyen du bloc d'accumulateur (1) est limité automatiquement à la valeur d'énergie (E2) prédéfinie dès que le bloc d'accumulateur (1) est mis en service pour la première fois.
